## Europäisches Patentamt
## European Patent Office
## Office européen des brevets

(19)

(11) Veröffentlichungsnummer: **0 100 508**
**B1**

(12) # EUROPÄISCHE PATENTSCHRIFT

(45) Veröffentlichungstag der Patentschrift:
**21.06.89**

(21) Anmeldenummer: **83107275.6**

(22) Anmeldetag: **25.07.83**

(51) Int. Cl.⁴: **C 08 G 18/72,** C 08 G 18/08, C 08 G 18/80, C 08 G 18/40, C 09 D 3/72, C 09 J 3/16, C 09 K 3/10

(54) **Lagerstabile, hitzehärtbare Stoffmischungen aus Polyisocyanat und mit Isocyanatgruppen reaktionsfähigen Verbindungen, Verfahren zu deren Herstellung und Verwendung.**

(30) Priorität: **31.07.82 DE 3228723**

(43) Veröffentlichungstag der Anmeldung:
**15.02.84 Patentblatt 84/7**

(45) Bekanntmachung des Hinweises auf die Patenterteilung:
**21.06.89 Patentblatt 89/25**

(84) Benannte Vertragsstaaten:
**AT BE DE FR IT NL SE**

(56) Entgegenhaltungen:
**EP-A-0 062 780**
**DE-A-2 237 674**

(73) Patentinhaber: **BASF Lacke + Farben Aktiengesellschaft, Max- Winkelmann- Strasse 80, D-4400 Münster (DE)**

(72) Erfinder: **Blum, Rainer, Bannwasserstrasse 58, D-6700 Ludwigshafen (DE)**
Erfinder: **Spoor, Herbert, Dr., Woogstrasse 44, D-6703 Limburgerhof (DE)**
Erfinder: **Osterloh, Rolf, Dr., Am Wehrhaus 16a, D-6718 Gruenstadt (DE)**
Erfinder: **Mosler, Gerhard, Dr., Hummelbrink 13, D-4400 Muenster (DE)**
Erfinder: **Rubbert, Bernhard, Dahlweg 20, D-4400 Muenster (DE)**

(74) Vertreter: **Rämisch, Friedrich, Dr., Carl- Bosch- Strasse 38, D-6700 Ludwigshafen (DE)**

**Beschreibung**

Die Erfindung betrifft bei Raumtemperatur lagerstabile, hitzehärtbare Stoffmischungen aus Polyisocyanat und mindestens einer mit Isocyanatgruppen reaktionsfähigen Verbindung, in welcher das Polyisocyanat in Form diskreter Teilchen, die an ihrer Oberfläche durch chemische Reaktion mit einem Desaktivierungsmittel desaktiviert sind, dispergiert ist, Verfahren zu deren Herstellung und ihre Verwendung.

Die Herstellung von Kombinationen von Polyisocyanaten mit Bindemitteln die mit Isocyanatgruppen reaktionsfähige Gruppierungen enthalten, und deren unmittelbare Anwendung, ist bekannt.

Große Schwierigkeiten bereitet jedoch die Tatsache, daß die Isocyanatgruppe schon bei Raumtemperatur mit den vorgesehenen Reaktionspartnern, z. B. Polyolen oder Polyamiden, reagiert, d. h. es lassen sich keine lagerstabilen Kombinationen formulieren.

Um diese Schwierigkeit zu umgehen, werden häufig Zweikomponentensysteme verwendet. Die Reaktionspartner werden dabei in separaten Zubereitungen aufbewahrt und erst unmittelbar vor der Applikation gemischt, worauf die Reaktion dann spontan oder wärme- und/oder katalysatorbeschleunigt abläuft.

Als Beispiel für eine solche Masse sei hier die US-PS-4 029 626 genannt. Die Nachteile dieses Verfahrens liegen in der Notwendigkeit getrennter Zubereitung und Lagerung der beiden Komponenten, der Schwierigkeiten beim genauen Dosieren und guten Mischen vor der Applikation und in der Gefahr der Verstopfung des Misch- und Applikationsgerätes durch frühzeitige Reaktion.

Eine andere bekannte Methode zur Herstellung lagerbeständiger Polyisocyanatmassen geht von unvernetzten sogenannten Präpolymeren aus, die nur wenig freies Isocyanat enthalten, wobei als Vernetzungsmittel die Luftfeuchtigkeit dient. Diese Methode wird beispielsweise in der FR-PS-1 237 936 beschrieben. Nachteilig ist in diesem Falle, daß die Härtung von der Oberfläche aus nur sehr langsam in die Tiefe der Beschichtung vordringt, die Endeigenschaften erst nach Wochen oder Monaten erreicht werden und z. B. zwischen großen Flächen oder in Höhlungen gar keine Härtung erfolgt.

Stabile Systeme lassen sich auch formulieren, wenn die Polyisocyanate zunächst mit einem monofunktionellen Reaktionspartner umgesetzt werden. Die erhaltenen Addukte weiden als verkappte oder blockierte Isocyanate bezeichnet, wenn sie weniger thermostabil sind als die Produkte der später beabsichtigten Vernetzungsreaktion. Unter Hitzeeinwirkung wird das Verkappungsmittel abgespalten und das Polyisocyanat geht unter Vernetzung die thermostabilere Bindung ein.

Dieses Prinzip wird z. B. in Vieweg/Höchtlen, Kunststoff-Handbuch, Band VII, Polyurethene (Carl Hanser Verlag, München, 1966), Seite 11 ff beschrieben und ist auch die Grundlage einer Reihe von Druckschriften, z. B. der DE-AS-2 640 295, der DE-AS-2 612 638, der DE-AS-2 639 491 bzw. der EPA-0 000 060.

Technische und wirtschaftliche Nachteile solcher Formulierungen ergeben sich aus dem abgespaltenen Verkappungsmittel, das, wenn es in der vernetzten Masse verbleibt, deren Eigenschaften verändert, oder, wenn es verdampft, zurückgewonnen bzw. aus der Abluft entfern werden muß.

In den DE-AS-1 570 548, DE-OS-2 842 805 und DE-OS-2 921 162 werden bei über 100° bzw. bei über 130° C schmelzende Polyisocyanate beschrieben, die mit speziellen Polyolen lagerstabile Kombinationen ergeben, die sich unter Erwärmung zu Beschichtungen für Gewebe bzw. Gewebeschläuche aushärten lassen.

Der technische Nachteil der diesen Druckschriften zu entnehmenden Kombinationen ist, daß sie, um gute Lagerstabilität zu erreichen, auf eine sehr enge Auswahl speziell aufgebauter Polyole angewiesen sind und daher beispielsweise für eine Reihe von Anwendungen gar nicht geeignet sind.

Aufgabe der vorliegenden Erfindung ist es, lagerstabile, hitzehärtbare flüssige bis pastenförmige Stoffmischungen aus Polyisocyanat und mit Isocyanatgruppen reaktionsfähigen Verbindungen aufzuzeigen, die die oben aufgeführten Nachteile nicht aufweisen.

Gegenstand der vorliegenden Erfindung sind bei Raumtemperatur lagerstabile, hitzehärtbare Stoffmischungen, enthaltend ein Polyisocyanat und mindestens eine gegenüber Isocyanatgruppen reaktionsfähige Verbindung, erhältlich durch Desaktivierung eines bei Raumtemperatur festen Polyisocyanats (A), in Form von diskreten Teilchen mit Teilchendurchmessern zwischen 0,1 und 150 μm, an der Teilchenoberfläche durch chemische Reaktion mit einem Desaktivierungsmittel (D), indem man 0,1 bis 20 Äquivalent % der insgesamt vorhandenen Isocyanatgruppen von (A) mit (B) umsetzt und das erhaltene oberflächenmodifizierte Polyisocyanat in einem Polymerisations-, Polykondensations- oder Polyadditionsprodukt (C) dispergiert, welches Amino-, Hydrazid-, Mercaptan- und/oder Carboxylgruppen enthält und eine Funktionalität von > 1, bezogen auf diese funktionellen Gruppen, aufweist oder erhältlich durch Dispergierung eines bei Raumtemperatur festen Polyisocyanats (A), in Form von diskreten Teilchen mit Teilchendurchmessern zwischen 0,1 und 150 μm, in einem Polymerisations-, Polykondensations- oder Polyadditionsprodukt (C), welches Amino-, Hydrazid-, Mercaptan- und/oder Carboxylgruppen enthält und eine Funktionalität von > 1, bezogen auf diese funktionellen Gruppen, aufweist, und Desaktivierung von (A) an der Teilchenoberfläche durch chemische Reaktion in situ mit einem Desaktivierungsmittel (B) indem man (A) mit 0,1 bis 20 Äquivalent %, bezogen auf die in (A) insgesamt vorhandenen Isocyanatgruppen, einer Verbindung (B) umsetzt, welche gegenüber Isocyanatgruppen reaktiver ist als die funktionellen Gruppen von (C).

Als Desaktivierungsmittel (B) werden vorzugsweise primäre oder sekundäre Amine, Wasser oder Verbindungen verwendet, die Carboxylgruppen, phenolische Hydroxylgruppen, Amidgruppen, Hydrazidgruppen oder alkoholische Hydroxylgruppen enthalten, mit der Maßgabe, daß die Verbindungen mit alkoholischen Hydroxylgruppen eine Löslichkeit in Wasser von unter 1 % aufweisen.

Gegenstand der vorliegenden Erfindung sind außerdem Verfahren zur Herstellung dieser Stoffmischungen.

Als Amino-, Hydrazid-, Mercaptan- und/oder Carboxylgruppen enthaltende Polymerisationsprodukte (C) mit einer Funktionalität von größer als 1, die gegebenenfalls teilweise durch Polyole ersetzt sein können, kommen an sich bekannte Produkte in Frage, deren Herstellung, soweit sie im folgenden zitiert wird, nicht beansprucht wird und nicht Gegenstand der vorliegenden Erfindung ist.

Gegenstand der vorliegenden Erfindung ist auch die Verwendung der erfindungsgemäßen Stoffmischungen als Beschichtungsmittel, Verklebungsmittel und Dichtungsmassen auf Metallen und Nichtmetallen sowie insbesondere als Unterbodenschutzmassen für Kraftfahrzeuge.

Die vorliegende Erfindung vermeidet die Nachteile des oben aufgezeigten Standes der Technik dadurch, daß die Polyisocyanate in Form diskreter Teilchen in den Amino-, Hydrazid-, Mercaptan-, und/oder carboxylgruppenhaltigen Polymerisations-, Polykondensations- oder Polyadditionsprodukten (C) mit einer Funktionalität von größer als 1, die gegebenenfalls teilweise durch Polyole ersetzt sein können, dispergiert und die dispersen Teilchen an ihrer Oberfläche durch chemische Reaktion mit einem Desaktivierungsmittel (B) desaktiviert sind. Für die Desaktivierung wird nur ein relativ geringer Teil der Isocyanatgruppen verbraucht, so daß die Teilchen noch reaktionsfähig bleiben.

Bei der Hitzehärtung wird die Phasentrennung durch Löse- oder Schmelzvorgänge aufgehoben und die Vernetzung kann stattfinden.

Zu den Aufbaukomponenten der erfindungsgemäßen Stoffmischungen ist im einzelnen folgendes auszuführen.

Geeignete Polyisocyanate (A) sind bei Raumtemperatur feste aliphatische, cycloaliphatische und aromatische Di- und Polyisocyanate, wie sie z. B. erhalten werden durch Addition von Diisocyanaten an Di-, Tri- oder Polyol, oder aus Diisocyanaten durch Dimerisierung zu Uretdionen, Trimerisierung zu Isocyanuraten und mit Aminen oder Wasser zu Biureten. Hierfür sind u. a. z. B. folgende Diisocyanate geeignet:

Diphenylmethandiisocyanat, das Additionsprodukt aus Toluylendiisocyanat und Trimethylolpropan oder das Cyanurat aus 3 Molen Toluylendiisocyanat und insbesondere schwerlösliches, pulverförmiges dimerisiertes Toluylendiisocyanat mit Uretdiongruppen.

Als mit Isocyanatgruppen reaktionsfähige Verbindungen kommen erfindungsgemäß Amino-, Hydrazid-, Mercaptan- und/oder Carboxylgruppen enthaltende Polymerisations,-Polykondensations- oder Polyadditionsprodukte (C) mit einer Funktionalltät von größer als 1, vorzugsweise 2 bis 4 in Frage, die gegebenenfalls teilweise, z. B. bis zu 95, vorzugsweise bis zu 50 Gewichtsprozent, durch ein Polyol ersetzt sein können. Funktionalität von unter 2 oder nicht ganzzahlige Funktionalität kann gegeben sein, wenn die mit Isocyanatgruppen reaktionsfähige Komponente nicht einheitlich ist, und wenn gegebenenfalls monofunktionelle Bestandteile enthalten sind.

Als Aminogruppen enthaltende Polymerisations-, Polykondensations- oder Polyadditionsprodukte (C) mit einer Funktionalität von größer als 1 eignen sich z. B. Polyamine mit primären und/oder sekundären Aminogruppen, z. B. Polyamidamine, die durch Polykondensation von dimerisierter Leinölfettsäure mit zwei- und dreiwertigen Aminen erhalten werden, wobei der Amingehalt durch geeignete Auswahl der Amine in breitem Rahmen variieren kann (z. B. ® Versamide von Schering).

Hydrazidgruppen tragende Polymerisationsprodukte (C) werden z. B. durch Hydrazinolyse von Polyacrylestern erhalten, wie sie von M. Hartmann, R. Dowbenko und T. Hockswender in Organic Coatings + Applied Polymer Science 46, 1982, Seite 429 mit 432 beschrieben ist.

Als Mercaptangruppen enthaltende Polymerisations-, Polykondensations- oder Polyadditionsprodukte (C) mit einer Funktionalität von größer als eignen sich z. B. Polythiole.

Mit der Bezeichnung "Polythiole" werden im vorliegenden Fall immer einfache oder komplexe organische Verbindungen bezeichnet, welche durchschnittlich mindestens zwei verzweigtkettige oder endständig angeordnete -SH funktionelle Gruppen je Molekül besitzen.

Solche Polythiole sind z. B. Ester von Mercaptofettsäuren mit Polyhydroxyverbindungen, deren Herstelung z. B. in der DE-OS-1 720 856 angegeben ist.

Als Carboxylgruppen enthaltende Polymerisations-, Polykondensations- oder Polyadditionsprodukt (C) mit einer Funktionalität von größer als 1 eignen sich z. B. gesättigte und ungesättigte Polyester, die unter Verwendung eines Überschusses an Säure hergestellt wurden; Homo- und Copolymerisate von Acrylsäure und/oder Methacrylsäure mit ihren Estern und/oder anderen geeigneten ungesättigten Monomeren; saure Polymere, die durch Alkoholyse der Additionsprodukte von Maleinsäure an ungesättigten Verbindungen, z. B.

Polybutadienöle oder Leinöl, erhalten werden. Desgleichen eignen sich auch Gemische dieser Amino-, Hydrazid-, Mercaptan- oder Carboxylgruppen enthaltenden Produkte sowie Polymerisations-, Polykondensations- und Polyadditionsprodukte, die unterschiedliche dieser funktionellen Gruppen enthalten, um z. B. gewünschte Eigenschaften, wie Haftung und Chemikalienresistenz einzustellen.

Geeignete Polyole als Zusatzkomponente für (C) sind die in der Polyurethanchemie üblicherweise verwendeten Polyesterole, Polyetherole und hydroxylgruppenhaltigen Polymerisate, beispielsweise Copolymerisate aus olefinisch ungesättigten Monomeren ohne aktive Wasserstoffe und olefinisch ungesättigten Monomeren mit aktivem Wasserstoff.

Geeignete Monomere ohne aktiven Wasserstoff sind z. B. Vinylaromaten, wie Styrol oder Vinyltoluol, Olefine, wie Ethylen oder Propylen, Acryl- oder Methacrylsäureester, wie z. B. Butylacrylat, 2-Ethylhexylacrylat Methylmethacrylat, Vinylester von geradkettigen oder verzweigten Carbonsäuren, wie z. B. Vinylacetat, Vinylpropionat oder Vinylpivalat sowie Vinylether, wie z. B. Vinylisobutylether.

Geeignete Monomere mit gegenüber Isocyanatgruppen reaktivem Wasserstoff sind z. B. Mono(meth)acrylester von mehrwertigen, insbesondere zweiwertigen Alkoholen, wie z. B. Butandiolmonoacrylat, Hydroxypropyl(meth)acrylat, andere copolymerisierbare olefinisch ungesättigte hydroxylgruppenhaltige Verbidungen, wie z. B. Vinylglykol.

Die erfindungsgemäßen Stoffmischungen enthalten die Polyisocyanate (A) in Form diskreter Teilchen mit Teilchendurchmessern zwischen 0,1 bis 150, vorzugsweise 1 bis 50 µm in den genannten mit Isocyanatgruppen reaktionsfähigen Verbindungen (C) bzw. deren Gemischen mit Polyolen dispergiert, wobei Isocyanatgruppen und mit Isocyanatgruppen reaktionsfähige Gruppen im allgemeinen in Mengenverhältnissen von 0,5 : 1 bis 1 : 0,5, vorzugsweise 0,9 : 1 bis 1 : 0,9 vorliegen.

Die Erfindung ist aber nicht auf diese Mengenangaben eingeschränkt, für bestimmte Zwecke kann auch davon abgewichen werden. Als Kleber für wiederentfernbare Metalletiketten sind z. B. Mischungen mit erheblichem Isocyanatunterschuß geeignet.

Die dispergierten Polyisocyanatteilchen sind an ihrer Oberfläche durch chemische Reaktion mit einem Desaktivierungsmittel (B)soweit desaktiviert daß bei Raumtemperatur keine Reaktion der Polyisocyanatteilchen mit den reaktionsfähigen Verbindunoen (C) eintritt.

Das Desaktivierungsmittel (B) wird so gewählt, daß es an der Oberfläche der Polyisocyanatteilchen chemisch gebunden ist und so eine stabile Phasentrennung zwischen Polyisocyanatteilchen und der isocyanatreaktiven Verbindung (C) bzw. deren Gemisch mit Polyol bewirkt wird.

Für die chemische Desaktivierung werden 0,1 bis 20, vorzugsweise 0,3 bis 5 Äquivalentprozent der insgesamt vorhandenen Isocyanatgruppen mit dem Desaktivierungsmittel (B) zur Reaktion gebracht.

Zur Beschleunigung und Steuerung der Desaktivierung können auch geeignete und bevorzugt die Desaktivierung selektiv fordernde Katalysatoren mitverwendet werden.

Als Desaktivierungsmittel (B) kommen in Frage: Wasser, Mono- und Polyamine, Mono- und Polyalkohole. Besonders gut geeignet sind längerkettige Monoamine, z. B. Stearylamin, die zu einer Art aufgepfropfter Emulgatoren abreagieren. Höhermolekulare Polyamine, wie z. B. Polyamidamine, und hydroxylterminierte Polymere, wie z. B. hydroxylterminierte Polybutadienöle, reagieren unter Ausbildung aufgepfropfter Schutzkolloide. Besonders geeignet zur Desaktivierung der Isocyanatgruppen an der Oberfläche der Polyisocyanatteilchen, sind auch Reaktionen, die auf den Isocyanaten zu Harnstoff bzw. Polyharnstoffstrukturen führen, weil diese in den meisten Polyolen und organischen Lösungsmitteln unlöslich sind. Solche Harnstoffe bzw. Polyharnstoffe bildenden Reagenzien sind Wasser und primäre oder sekundäre Amine, wobei kurzkettige Diamine, wie Ethylendiamin oder Propylendiamin bevorzugt sind. Die aus diesen kurzkettigen Diaminen gebildeten Polyharnstoffe sind organophober als die aus längerkettigen Diaminen gebildeten und wirken deshalb besser stabilisierend. Eine bevorzugte Verfahrensweise geht von schwerlöslichem pulverförmigem dimerisiertem Toluylendiisocyanat aus.

Ein Vorteil dieses Verfahrens ist dadurch gegeben, daß die Harnstoffstrukturen bei höherer Temperatur mit weiteren Isocyanaten unter Bildung von Biuretstrukturen weiterreagieren, d. h. das Desaktivierungsmittel wird in das vernetzte System eingebaut und hinterläßt keine Inhomogenität.

Geeignete Desaktivierungsmittel (B) sind außerdem Verbindungen die Carboxylgruppen, phenolische Hydroxylgruppen, Amidgruppen, Hydrazidgruppen oder alkoholische Hydroxylgruppen enthalten, wobei die Verbindungen mit alkoholischen Hydroxylgruppen eine Löslichkeit in Wasser von unter 1 % aufweisen.

Als Carboxylgruppen enthaltende Desaktivierungsmittel kommen beispielsweise in Frage: Homo- und Copolymerisate der Acrylsäure, Methacrylsäure, Maleinsäure und anderer polymerisierbarer Säuren, saure Polykondensationsprodukte, wie z. B. mit Säureüberschuß hergestellte Polyester, saure Polymere, die durch Alkoholyse der Addukte von Maleinsäureanhydrid an ungesättigten Polymeren, z. B. Leinöl oder Polybutadienöl, erhalten werden.

Als Desaktivierungsmittel geeignete Verbindungen, die phenolische Hydroxylgruppen enthalten, sind z. B. Phenol, Kresol, Cardanol, p-tert.-Butylphenol, 2,2-Bis[4-hydroxy-phenyl]-propan und die unvernetzten Kondensationsprodukte dieser Phenolkörper mit Aldehyden, z. B. Formaldehyd, die auch als Resole bezeichnet werden.

Als Desaktivierungsmittel geeignete Amidgruppen enthaltende Verbindungen sind z. B. lösliche Polyamide und Polymerisate von Acrylamid und Methacrylamid oder Copolymerisate von Acrylamid und/oder Methacrylamid mit Acrylsäure und/oder Methacrylsäureestern.

Geeignet sind auch Polyhydrazide, die durch Hydrazinolyse von Polyacrylaten erhalten werden und deren Herstellung z. B. von M. Hartmann, R. Dowbenko, U.T. Hockswender in Organic Coatings + Applied Polymer Science 46, 1982, Seite 429 mit 432 beschrieben wird.

In einer besonderen Ausführungsform können die Stoffmischungen noch zusätzlich 0,5 bis 60 % üblicher Weichmacher, wie Ester der Phthal-, Adipin-, Sebacin- oder Phosphorsäure, hochsiedende Kohlenwasserstoffe, chlorierte Kohlenwasserstoffe, epoxidierte natürliche Öle oder niedermolekulare Polyester enthalten.

Ausführliche Erläuterungen des Begriffes Weichmacher sind in D. Weinmann, Beschichtungen mit Lacken und Kunststoffen, Verlag W. A. Colomb, Stuttgart, 1967, Seite 103 ff, gegeben.

Zur Einstellung auf spezielle Verarbeitungsbedingungen bzw. zur Erzielung besonderer Effekte, können in den mit Isocyanatgruppen reaktionsfähigen Verbindungen (C) Schutzkolloide, beispielsweise in Mengen von 0,1 bis 15 %, Lösungsmittel, wie Benzine, Ester, Ketone, Ether, Glykolether, Pigmente, wie Ruß, Titandioxid, organische und anorganische Farbpigmente, Füllstoffe, wie z. B. Talkum, Tonerde, Kreide und Quarzmehl, Farbstoffe oder andere übliche Hilfsstoffe enthalten sein.

Die Herstellung der erfindungsgemäßen Stoffmischungen erfolgt im allgemeinen unter Verwendung üblicher Dispergier- und Mischaggregate. Des Polyisocyanat (A) wird zweckmäßigerweise bei Temperaturen unterhalb 40°C, vorzugsweise bei Temperaturen zwischen 0 und 25°C, in der mit Isocyanatgruppen reaktionsfähigen Verbindung (C) dispergiert, wobei entweder letztere bereits die gesamte Menge des Desaktivierungsmittels (B) enthält, oder das Desaktivierungsmittel (B) kurz nach dem Dispergiervorgang der Mischung zugegeben wird. Die Gegenwart von Katalysatoren, die die Reaktion zwischen dem Polyisocyanate (A) und dem Desaktivierungsmittel (B) selektiv fördern, ist gegebenenfalls zweckmäßig.

Eine andere Möglichkeit zur Herstellung der erfindungsgemäßen Stoffmischungen besteht darin, das Polyisocyanat (A) zunächst im allgemeinen bei Temperaturen von unterhalb 40°C, vorzugsweise zwischen 0 und 25°C und gegebenenfalls in Gegenwart geeigneter Katalysatoren mit dem Desaktivierrungsmittel (B) zu behandeln und dann in der mit Isocyanatgruppen reaktionsfähigen Verbindung (C) bzw. deren Gemisch mit Polyol zu dispergieren.

Die erfindungsgemäßen Stoffmischungen sind bei 25°C mindestens über 3 Monate gut lagerstabil, ohne daß eine die bestimmungsmäßige Verwendung der Stoffmischung beeinträchtigende Veränderung der Masse zu beobachten wäre.

Die Härtung der erfindungsgemäßen Stoffmischungen erfolgt im allgemeinen bei 70 bis 180°C.

Die erfindungsgemäßen Stoffmischungen können in flüssiger oder pastöser Form verwendet werden und eignen sich als Beschichtungsmittel, Verklebungsmittel und Dichtungsmassen. Als Substrate kommen dabei Metalle, wie Stahl, Aluminium, Kupfer, Magnesium, die auch mit einer Grundierung überzogen sein können und Nichtmetalle, wie Glas, Keramik, wärmebeständige Kunststoffe und textile Substrate in Frage.

Besonders vorteilhaft lassen sich die erfindungsgemäßen Stoffmischungen als Unterbodenschutz für Kraftfahrzeuge verwenden.

Die nachfolgenden Beispiele sollen die Erfindung verdeutlichen, ohne sie jedoch auf diese Beispiele einzuschränken.

Die in den nachfolgenden Beispiele genannten Teile und Prozente sind, soweit nicht anders angegeben, Gewichtsteile und Gewichtsprozente.

**Beispiel 1**

A) Herstellung eines hydrazidgruppenhaltigen Polymerisates

In einem Polymerisationsreaktor aus Glas mit Rückflußkühler, 2 Zulaufgefäßen, einem Rührer und einem Thermometer werden 430 Teile Butylglykol unter leichtem Stickstoffstrom auf 130°C erwärmt, Zulauf 1, bestehend aus 225 Teilen Ethylhexylacrylat, 225 Teilen Methylmethacrylat, 50 Teilen Ethylacrylat und 5 Teilen Dodecylmercaptan wird innerhalb von 3 Stunden und Zulauf 2, bestehend aus 70 Teilen Butylglykol und 5 Teilen t-Butylperbenzoat, in 4 Stunden zugegeben.

Es wird auf 60°C gekühlt und 25 Teile Hydrazinhydrat zugegeben. Die Temperatur wird in einer Stunde auf 130°C erhöht und bei dieser Temperatur gehalten, dann wird der Rückflußkühler durch einen absteigenden Kühler ersetzt und die Temperatur auf 160°C erhöht. Es werden 75 g Destillat erhalten. Dann wird abgekühlt und die Polymerisatlösung mit Butylglykol auf einen Festkörpergehalt von 50 % eingestellt. Die erhaltene Harzlösung hat eine Aminzahl von 29,3.

B) Herstellung einer hitzehärtbaren, lagerstabilen Mischung mit einem hydrazidgruppenhaltigen Polymerisat und einem Polyetherpolyol:

70 Teile Polyetherpolyol auf Basis von Glyzerin und Propylenoxid mit einer OH-Zahl von ca. 400 und einem Molekulargewicht von ca. 420, 150 Teile eines Polyetherdiols mit einem Molekulargewicht von ca. 200 und einer Viskosität von 320 mPas, das auf Basis von Propylenoxid hergestellt wurde und 105 Teile feinteiliges, über Uretdionbildung dimerisiertes 2,4-Toluylendiisocyanat, werden bei einer Temperatur von max. 35°C unter einem schnellaufenden Rührer zu einer fließfähigen Paste verarbeitet.

Dann wird auf 20°C gekühlt und nacheinander eingerührt: 0,5 Teile eines Polyamidamins mit einer Aminzahl von ca. 400, 1 Teil einer 25-%-igen butylglykolischen Lösung von Phenylquecksilberpropionat und 100 Teile des Polymerisates A.

Es wird eine fließfähige Paste erhalten, die bei 140°C in 20 Minuten zu einer weichzähen Masse erstarrt, die gute Wasserbeständigkeit und gute Haftung an blanken, zinkphosphatierten oder grundierlackiertem Stahlblech zeigt. Auf Grund dieser Eigenschaften ist die Paste als Nahtabdichtmasse im Automobilbau verwendbar.

Nach einer Lagerung von 3 Monaten bei 30°C haben sich weder die Paste noch die Qualität der aus der gelagerten Paste hergestellten Dichtung verändert.

## Beispiel 2

Hitzevernetzbare Mischung mit einem carboxylgruppenhaltigen Polymerisat und einem Polyetherpolyol

In einem Polymerisationsreaktor mit Rührer, Rückflußkühler, zwei Zulaufgefäßen und Thermometer werden 450 Teile eines Polyetherdiols mit einem Molekulargewicht von ca. 1060 und 450 Teile eines Polyetherdiols auf Basis von Propylenoxid mit einem Molekulargewicht von ca. 2000 auf 140°C erwärmt. Zulauf 1, bestehend aus 50 Teilen Hydroxypropylacrylat, 50 Teilen Acrylsäure, 400 Teilen Ethylhexylacrylat, 400 Teilen Styrol und 9 Teilen 2-Hydroxyethylmercaptan wird in 3 Stunden und Zulauf 2, bestehend aus 45 Teilen t-Butylperbenzoat in 4 Stunden zugegeben. Anschließend wird noch 2 Stunden bei 140°C nachpolymerisiert und dann abgekühlt.
Die erhaltene Masse wird in einem Planetenkneter umgefüllt. Dazu werden 170 Teile feinpulveriges, durch Uretdionbildung dimerisiertes 2,4-Toluylen-diisocyanat eingemischt. Dabei wird durch Kühlung die Temperatur bei ca. 20°C gehalten. Nachdem eine glatte homogene Paste entstanden ist, werden nacheinander 8 Teile eines Polyamidaminharzes mit einer Aminzahl von ca. 200, 5 Teile Dibutylzinndilaurat, 5 Teile Diazabiscyclooctan und 700 Teile feinpulverige, trockene Kreide untergemischt bis eine glatte homogene Paste entsteht.

Diese Paste läßt sich bei Temperaturen von 110 bis 150°C in einer Schichtdicke von ca. 10 mm zu einer angeschäumten weichelastischen Masse vernetzen, die als Teppichrückseitenbeschichtung oder als Schalldämpfmasse im Automobilbau verwendbar ist.

Die Paste ist bei Raumtemperatur mindestens 3 Monate stabil. Wird eine gleiche Paste ohne den stabilisierenden Zusatz des Polyamidaminharzes hergestellt, so beträgt die Lagerstabilität weniger als 1 Woche.

## Beispiel 3

A) Herstellung eines Polythiols

159 Teile β-Mercaptopropionsäure, 650 Teile eines Polyethertriols auf Basis von Glyzerin und Propylenoxid mit einem Molekulargewicht von ca. 2000, 0,5 Teile p-Toluolsulfonsäure und 100 Teile Benzol wurden in einem Rührbehälter mit Wasserauskreiser gekocht. Das azeotrope Benzol/Wasser-Gemisch wurde abgenommen. Hierbei wurden 25 Teile Wasser erhalten. Das Reaktionsgemisch wurde unter Vakuum mehrere Stunden bei 70°C gehalten. Das erhaltene Polythiopolymerisat hatte ein Molekulargewicht von etwa 2210 bis 2230 und eine durchschnittliche Funktionalität von 3.

B) Herstellung einer lagerstabilen, hitzehärtbaren Masse mit einem Polythiol

750 Teile des Polythiols A werden in einem gekühlten Laborkneter mit 90 Teilen feinpulvrigem über Uretdiongruppen dimerisierten 2,4-Toluylendiisocyanat homogen verknetet. Es werden 1,8 Teile Polyamidaminharz mit einer Aminzahl von ca. 400 zugegeben und bei ca. 20°C 20 Minuten weitergemischt. Dann werden 7,5 Teile einer 33-%-igen Lösung von Diazabiscyclooctan in Butylglykol untergemischt. Es wird eine gut fließfähige Paste erhalten, die > 3 Monate lagerstabil ist und durch Erwärmen auf 110 bis 140°C in eine elastomere Masse überführt werden kann.

**Patentansprüche**

1. Verfahren zur Herstellung von bei Raumtemperatur lagerstabilen, hitzehärtbaren Stoffmischungen, enthaltend ein Polyisocyanat und mindestens eine gegenüber Isocyanatgruppen reaktionsfähige Verbindung, dadurch gekennzeichnet, daß man ein bei Raumtemperatur festes Polyisocyanat (A), in Form von diskreten Teilchen mit Teilchendurchmessern zwischen 0,1 und 150 µm, an der Teilchenoberfläche durch chemische Reaktion mit einem Desaktivierungsmittel (B) desaktiviert, indem man 0,1 bis 20 Äquivalentprozent der insgesamt vorhandenen Isocyanatgruppen von (A) mit (B) umsetzt und das erhaltene oberflächenmodifizierte Polyisocyanat in einem Polymerisations-, Polykondensations- oder Polyadditionsprodukt (C) dispergiert, welches Amino-, Hydrazid-, Mercaptan- und/oder Carboxylgruppen enthält und eine Funktionalität von > 1, bezogen auf diese funktionellen Gruppen, aufweist.

2. Verfahren zur Herstellung von bei Raumtemperatur lagerstabilen, hitzehärtbaren Stoffmischungen, enthaltend ein Polyisocyanat und mindestens eine gegenüber Isocyanatgruppen reaktionsfähige Verbindung, dadurch gekennzeichnet, daß man ein bei Raumtemperatur festes Polyisocyanat (A), in Form von diskreten Teilchen mit Teilchendurchmessern zwischen 0,1 und 150 µm, in einem Polymerisations-, Polykondensations- oder Polyadditionsprodukt (C) dispergiert, welches Amino-, Hydrazid-, Mercaptan- und/oder Carboxylgruppen enthält und eine Funktionalität von > 1, bezogen auf diese funktionellen Gruppen, aufweist, und (A) in situ an der Teilchenoberfläche durch chemische Reaktion mit einem Desaktivierungsmittel (B) desaktiviert, indem man (A) mit 0,1 bis 20 Äquivalentprozent, bezogen auf die in (A) insgesamt vorhandenen Isocyanatgruppen, einer Verbindung (B) umsetzt, welche gegenüber Isocyanatgruppen reaktiver ist als die funktionellen Gruppen von (C).

3. Stoffmischungen, erhältlich nach dem Verfahren von Anspruch 1.

4. Stoffmischungen, erhältlich nach dem Verfahren von Anspruch 2.

5. Stoffmischungen nach Anspruch 3 oder 4, dadurch gekennzeichnet, daß sie zusätzlich Schutzkolloide, Lösungsmittel, Weichmacher, Pigmente, Füllstoffe, Farbstoffe oder andere in der Lacktechnik übliche Hilfsstoffe enthalten.

6. Stoffmischungen nach Anspruch 3 bis 5, dadurch gekennzeichnet, daß das Desaktivierungsmittel (B) ein primäres oder sekundäres Amin, Wasser oder eine Verbindung ist, die Carboxylgruppen, phenolische Hydroxylgruppen, Hydrazingruppen, Amidgruppen oder alkoholische Hydroxylgruppen enthält, mit der Maßgabe, daß Verbindungen mit alkoholischen Hydroxylgruppen eine Löslichkeit in Wasser von unter 1 % aufweisen.

7. Stoffmischungen nach Anspruch 3 bis 6, dadurch gekennzeichnet, daß das Äquivalentverhältnis zwischen in (A) noch vorhandenen NCO-Gruppen und gegenüber Isocyanat reaktiven Gruppen in (C) zwischen 1 : 0,5 und 0,5 : 1 liegt.

8. Stoffmischungen nach Anspruch 3 bis 7, dadurch gekennzeichnet, daß Komponente (C) ein Polyol enthält.

9. Verwendung der Stoffmischungen gemäß einem der Ansprüche 3 bis 8 als Beschichtungsmittel, Verklebungsmittel oder Dichtungsmassen auf Metallen und Nichtmetallen.

10. Verwendung der Stoffmischungen gemäß einem der Ansprüche 3 bis 8 als Unterbodenschutzmassen für Kraftfahrzeuge.

**Claims**

1. A process for the preparation of a heat-curable mixture having a long shelf life at room temperature and containing a polyisocyanate and one or more compounds which are reactive to all isocyanate groups, wherein a polyisocyanate (A) which is solid at room temperature, in the form of discrete particles having particle diameters of from 0.1 to 150 µm, is deactivated at the particle surface by chemical reaction with a deactivator (B) by reacting from 0.1 to 20 equivalent percent of the total amount of isocyanate groups of (A) with (B) and dispersing the resulting surface-modified polyisocyanate in a polymer, polycondensate or polyadduct (C) which contains amino, hydrazide, mercapto and/or carboxyl groups and has a functionality of > 1, based on these functional groups.

2. A process for the preparation of a heat-curable mixture having a long shelf life at room temperature and containing a polyisocyanate and one or more compounds which are reactive to all isocyanate groups, wherein a polyisocyanate (A) which is solid at room temperature, in the form of discrete particles having particle diameters of from 0.1 to 150 µm, is dispersed in a polymer, polycondensate or polyadduct (C) which contains amino, hydrazide, mercapto and/or carboxyl groups and has a functionality of > 1, based on these functional groups, and (A) is deactivated in situ at the particle surface by chemical reaction with a deactivator (B) by reacting (A) with from 0.1 to 20 equivalent percent, has a functionality of > 1, based on these functional groups, and (A) is deactivated in situ at the particle surface by chemical reaction with a deactivator (B) by reacting (A) with from 0.1 to 20 equivalent percent, based on the total amount of isocyanate groups present in (A), of a compound (B) which is more reactive toward isocyanate groups than the functional groups of (C).

3. A mixture obtainable by a process as claimed in claim 1.

4. A mixture obtainable by a process as claimed in claim 2.

5. A mixture as claimed in claim 3 or 4, which additionally contains protective colloids, solvents, plasticizers, pigments, fillers, dyes or other assistants conventionally used in coating technology.

6. A mixture as claimed in any of claims 3 to 5, wherein the deactivator (B) is a primary or secondary amine, water or a compound which contains carboxyl groups, phenolic hydroxyl groups, hydrazine groups, amide groups or alcoholic hydroxyl groups, with the proviso that compounds containing alcoholic hydroxyl groups have a solubility in water of less than 1 %.

7. A mixture as claimed in any of claims 3 to 6, wherein the ratio of the number of equivalents of NCO groups still present in (A) and the number of equivalents of groups in (C) which are reactive toward isocyanate is from 1 : 0.5 to 0.5 : 1.

8. A mixture as claimed in any of claims 3 to 7, wherein component (C) contains a polyol.

9. Use of a mixture as claimed in any of claims 3 to 8, as a coating material, an adhesive or a sealing compound on metals and nonmetals.

10. Use of a mixture as claimed in any of claims 3 to 8, as an underbody protection compound for automobiles.

**Revendications**

1. Procédé pour la préparation de mélanges thermodurcissables, stables au stockage à la température ambiante, contenant un polyisocyanate et au moins un composé capable de réagir avec des groupements isocyanate, caractérisé en ce qu'on désactive un polyisocyanate (A) solide à la température ambiante, sous forme de particules discrètes ayant des diamètres compris entre 0,1 et 150 µm, au niveau des surfaces de ces particules, par réaction chimique avec un agent de désactivation (B), en faisant réagir avec (B) 0,1 à 20 équivalents % des groupements isocyanate de (A) présents au total, et en ce qu' on met le polyisocyanate modifié superficiellement ainsi obtenu en dispersion dans un produit de polymérisation, de polycondensation ou de polyaddition (C) qui contient des groupements amino, hydrazide, mercaptan et/ou carboxyle et qui présente une fonctionnalité, rapportée à ces groupements fonctionnels, supérieure à 1.

2. Procédé pour la préparation de mélanges thermodurcissables, stables au stockage à la temperature ambiante, contenant un polyisocyanate et au moins un composé capable de réagir avec des groupements isocyanate, caractérisé en ce qu'on met un polyisocyanate (A) solide à la température ambiante, sous forme de particules discrètes ayant des diamètres compris entre 0,1 et 150 µm, en dispersion dans un produit de polymérisation, de polycondensation ou de polyaddition (C) qui contient des groupements amino, hydrazide, mercaptan et/ou carboxyle et qui présente une fonctionnalité, rapportée à ces groupements fonctionnels, supérieure à 1, et en ce qu'on désactive (A) in situ, au niveau des surfaces des particules, par réaction chimique avec un agent de désactivation (B), en faisant réagir (A) avec 0,1 à 20 équivalents %, sur la base des groupements isocyanate présents au total dans (A), d'un composé (B) qui est plus réactif à l'égard des groupements isocyanate que les groupements fonctionnels de (C).

3. Mélanges obtenus par le procédé de la revendication 1.

4. Mélanges obtenus par le procédé de la revendication 2.

5. Mélanges selon la revendication 3 ou 4, caractérisés en ce qu'ils contiennent en plus des colloïdes de protection, des solvants, des plastifiants, des pigments, des matières de charge, des colorants ou d'autres produits auxiliaires utilisés ordinairement dans la technique des vernis.

6. Mélanges selon l'une quelconque des revendications 3 à 5, caractérisés en ce que l'agent de désactivation (B) est une amine primaire ou secondaire, l'eau ou un composé qui contient des groupements carboxyle, des groupements hydroxyle phénoliques, des groupements hydrazine, des groupements amide ou des groupements hydroxyle alcooliques, à la condition que les composés contenant des groupements hydroxyle alcooliques présentent une solubilité dans l'eau de moins de 1 %.

7. Mélanges selon l'une quelconque des revendications 3 à 6, caractérisés en ce que le rapport d'équivalents entre des groupements NCO encore présents dans (A) et des groupemnts capables de réagir avec un isocyanate dans (C) se situe entre 1 : 0,5 et 0,5 : 1.

8. Mélanges selon l'une quelconque des revendications 3 à 7, caractérisés en ce que le composant (C) contient un polyol.

9. Utilisation des mélanges selon l'une quelconque des revendications 3 à 9 comme produits d'enduction, produits de collage ou matières d'étanchéité sur des métaux et des matériaux non métalliques.

10. Utilisation des mélanges selon l'une quelconque des revendications 3 à 8 comme matières de protection du bas de caisse pour véhicules automobiles.